# EUROPÄISCHE PATENTSCHRIFT

(11) **EP 1 582 464 B1**
(45) Veröffentlichungstag und Bekanntmachung des Hinweises auf die Patenterteilung: **13.02.2008**
(21) Anmeldenummer: 05004249.8
(22) Anmeldetag: 26.02.2005
(51) Int. Cl.: B65B 21/18, B67C 3/26

(54) **Füllventil zum Abfüllen von Flüssigkeiten in Behälter**
Filling nozzle for filling containers with liquids
Bec de remplissage pour remplir les réservoirs de liquide

(30) Priorität: 01.04.2004 DE 102004016189
(43) Veröffentlichungstag der Anmeldung: 05.10.2005
(73) Patentinhaber: KHS AG, 44143 Dortmund (DE)
(72) Erfinder: Kaisinger, Rolf, 67550 Worms (DE)

(56) Entgegenhaltungen:
- DE-A1- 19 708 976
- DE-B- 1 162 757
- DE-U1- 8 914 977
- US-A- 3 601 951

## Beschreibung

Die vorliegende Erfindung betrifft eine Packmaschine gemäß dem Oberbegriff des Anspruches 1, die z.B. aus Dokument DE 1 162 757 bekannt ist. Vorteilhaft Weiterbildungen sind in den Unteransprüchen angegeben.

In der Getränkeindustrie wird ein bedeutender Anteil des Umsatzes mit in Mehrwegbehältern abgefüllten Getränken erzielt.

Die Verwendung von Mehrwegbehältern bedingt, dass diese Behälter nach dem Entleeren wieder in den ursprünglichen oder auch einen anderen Abfüllbetrieb zurück gelangen, wo diese Behälter gereinigt, auf eventuelle Fehler überprüft, neu befüllt, etikettiert und erneut ausgeliefert werden.

In der großen Mehrzahl aller Fälle erfolgen sowohl Anlieferung als auch die Auslieferung der Behälter anhand der allgemein bekannten Getränkekisten.

Seit einigen Jahren steigt der Anteil der für den Vertrieb von Getränken verwendeten Kunststoffbehälter kontinuierlich an. Dieses hat zur Folge, dass es immer häufiger vorkommt, dass in Leergut-Getränkekisten, welche in einen Abfüllbetrieb gelangen, sowohl Kunststoff-, als auch Glasflaschen enthalten sind.

Dieses führt insbesondere dann zu Problemen, wenn Kunststoffflaschen in eine Abfüllanlage gelangen, welche für die Verarbeitung von Glasflaschen bestimmt und somit auch entsprechend ausgelegt ist.

Die Probleme bestehen darin, dass diese Kunststoffflaschen - welche aufgrund ihres durch Material, äußere Form und die Größe der Standfläche bestimmten Aufbaues eine hohe Lage des Schwerpunktes verbunden mit einer entsprechenden geringen Kippstabilität aufweisen - nicht in der Lage sind, eine Abfüllanlage für Glasflaschen, welche hohe Beschleunigungen und Transportgeschwindigkeiten der Behälter aufweist, störungsfrei zu durchlaufen.

Diese nicht gegebene Kippstabilität führt dazu, dass diese Kunststoffflaschen oft schon nach wenigen Transportmetern, spätestens aber in der ersten Kurve umfallen und somit den Produktionsprozess empfindlich stören, was in der Regel kostenintensive Produktionsunterbrechungen und/oder manuelle Eingriffe des Bedienungspersonals nach sich zieht, was in der Praxis äußerst unerwünscht ist.

Zur Lösung dieses Problems hat es sich in der Praxis bewährt, vorsorglich alle Leergut-Flaschen mit einer bestimmten Flüssigkeitsmenge zu füllen, um ihnen durch die auf diesem Weg veränderte Schwerpunktlage eine größere Kippstabilität zu verleihen.

Dieser Vorgang des Füllens mit einer bestimmten Flüssigkeitsmenge ist unter dem Begriff "Anfüllen" bekannt.
Als Flüssigkeit wird in der Regel Wasser verwendet, wobei die Flüssigkeitsmenge beispielsweise so bemessen wird, dass die Flaschen nach dem Anfüllen eine Füllhöhe von 20-30 Millimetern aufweisen.

Zur Zeit entspricht es dem Stand der Technik, dieses Füllen der Flaschen vor oder nach dem Auspacken selbiger aus den Getränkekisten durch eine eigens und ausschließlich für diesen Zweck vorgesehene Vorrichtung bzw. Maschine durchführen zu lassen.
Durch diese Vorgehensweise ergibt sich für den Produktionsbetrieb ein erhöhter Kostenaufwand, da jede einzelne Vorrichtung oder Maschine u.a. Betriebs-, Wartungs-, Reparatur-, Finanzierungs- und Platzkosten verursacht.

Aufgabe der Erfindung ist es, eine Vorrichtung aufzuzeigen, welche die bislang verwendete separate Maschine überflüssig macht und somit die mit dieser verbundenen Kosten einspart. Dazu stellt die vorliegende Erfindung eine verbesserte Packmaschine, insbesondere einen verbesserten Auspacker vor, welcher aufgrund seiner überaus vorteilhaften, erfinderischen Gestaltung in der Lage ist, Flaschen bereits während des Auspackvorganges mit einem bestimmten Flüssigkeitsvolumen zu füllen.

In einer weiteren Ausbildung der vorliegenden Erfindung ist vorgesehen, Flaschen durch einen Einpacker während des Einpackens mit Füllgut zu füllen.

Im Nachfolgenden wird die vorliegende Erfindung anhand eines Ausführungsbeispieles näher erläutert.

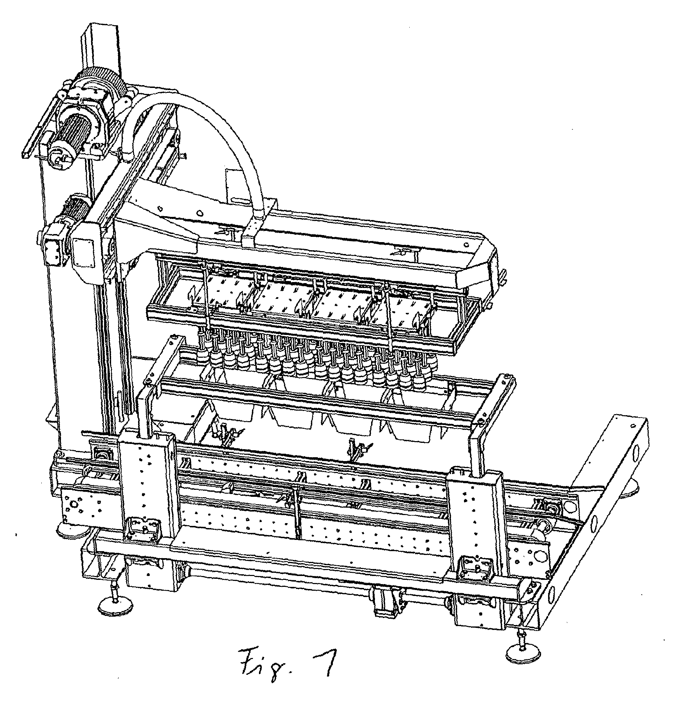

Im Einzelnen zeigt die
- Figur 1: in einer stark vereinfachten Übersichtszeichnung einen Ein- bzw. Auspacker, die
- Figur 2: in einer teilweise geschnittenen Seitenansicht eine zum Stand der Technik gehörende Packtulpe, und die
- Figur 3: eine erfindungsgemäße Packtulpe

Weiterbildungen, Vorteile und Anwendungsmöglichkeiten der Erfindung ergeben sich aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung. Gleichzeitig wird der Inhalt der Ansprüche zu einem Bestandteil der Beschreibung gemacht.

Packmaschinen für das Aus- und/oder Einpacken von z.B. Flaschen in Getränkekisten sind seit geraumer Zeit bekannt. Je nach erforderlicher Packleistung und räumlichen Gegebenheiten innerhalb des Abfüllbetriebes können diese z.B. als kontinuierlich arbeitende, horizontal oder vertikal orientierte Rundläufermaschinen, oder aber auch als taktweise arbeitende Portalmaschinen ausgebildet sein. Ebenfalls bekannt sind Ausgestaltungen, bei denen mit zahlreichen Greifelementen versehene Industrieroboter verwendet werden.

Allen bekannten Varianten von Packmaschinen ist gemeinsam, dass diese mit Greifelementen, den so genannten Packtulpen 15 ausgestattet sind, welche die Flaschen an ihren Mündungsbereichen ergreifen, sicher arretieren und im Anschluss an den durch die Packmaschine (Auspacker oder Einpacker) 16 ausgeführten Bewegungsablauf wieder freigeben.

Im Rahmen der vorliegenden Erfindung wird eine modifizierte Packmaschine 16 vorgestellt, welche u.a. mit neuen, modifizierten Packtulpen 15 ausgestattet ist, wodurch es ermöglicht wird, die oben beschriebene Anfüllung der Flaschen bereits während des Auspackens der Flaschen aus den Getränkekisten durchzuführen.

Der Arbeitsablauf stellt sich wie folgt dar. Die mit den leeren Flaschen gefüllten Getränkekisten werden anhand bekannter Transportförderer der Packmaschine 16 zugeführt. Dabei können Transportförderer und Packmaschine 16 derart ausgebildet sein, dass mehrere Getränkekisten gleichzeitig ausgepackt werden, wodurch die Maschinenleistung beträchtlich erhöht wird.

Zum eigentlichen Auspacken der Flaschen werden die Packtulpen 15 auf die Flaschenmündung aufgesetzt, wobei die Packtulpen 15 auch einen Teil des Flaschenhalses umschließen.

Üblicher Weise sind mehrere dieser Packtulpen 15 gemeinsam an einer Tragplatte angeordnet, wobei die räumliche Anordnung der Packtulpen genau der räumlichen Anordnung der in einem Arbeitstakt auszupackenden Flaschen entspricht.

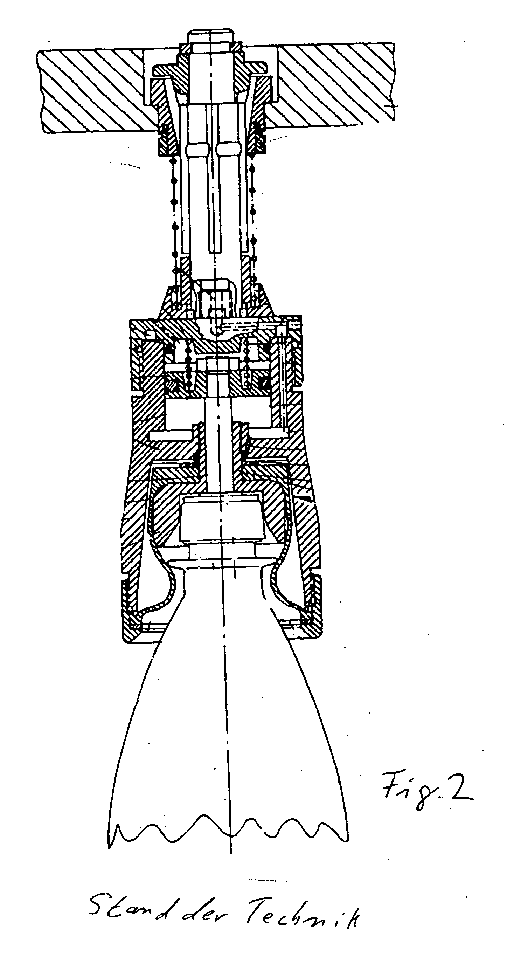

Um die Flaschen für das Auspacken sicher arretieren zu können, beinhalten die Packtulpen 15 eine Arretierungsvorrichtung. Diese kann z.B. aus mechanisch betätigten, fingerförmigen Greiferelementen, oder aber auch, wie in der Figur 2 dargestellt, aus einem verformbaren Kunststoffelement bestehen. Dabei bildet dieses Kunststoffelement mit der äußeren Wandung der Packtulpe einen abgeschlossenen Raum welcher mit Druckluft beaufschlagt werden kann. Ist dieser Raum mit Druckluft beaufschlagt, so legt sich das Kunststoffelement fest an den Flaschenhals wodurch die Flasche sicher ausgepackt werden kann.

Durch eine geeigneten Bewegung der Packtulpen 15, bzw. der diese Packtulpen 15 aufnehmenden Tragplatte, werden Flaschen und Getränkekisten voneinander getrennt und anschließend räumlich getrennten Behandlungsstationen zugeführt.

Wie bereits erwähnt, handelt es sich bei der nächsten Behandlungsstation für die Flaschen häufig um eine separate Vorrichtung zum Anfüllen dieser Flaschen.

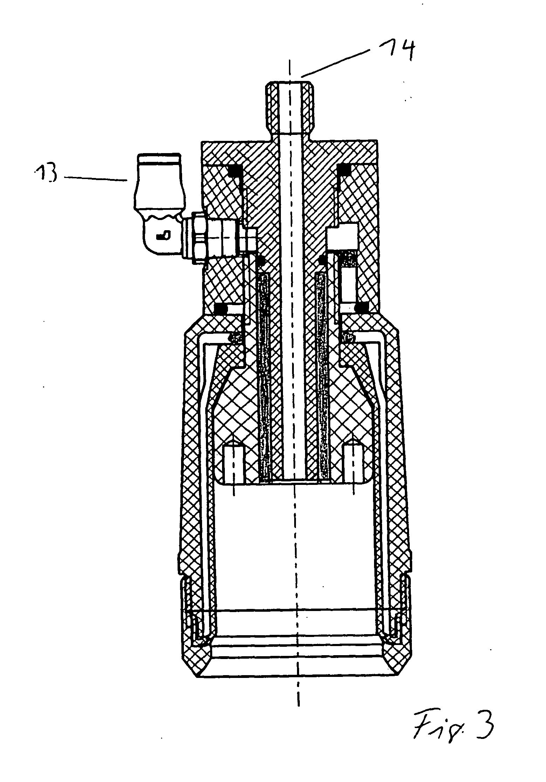

Die vorliegende Erfindung schlägt u.a. die Verwendung erfindungsgemäßer Packtulpen 15 gemäß Fig. 3 vor, wobei es sich bei der gezeigten Packtulpe um eine solche mit Druckluft beaufschlagbarem Kunststoffelement handelt. Es versteht sich von selbst, dass auch Packtulpen 15 mit anderen, hier nicht explizit behandelten Arretierungsmitteln, wie z.B. fingerförmigen Greiferelementen, verformbaren flächenförmigen Klemmelementen usw. ebenfalls unter den Schutzumfang der vorliegenden Erfindung fallen.

Wie in der Figur 3 dargestellt, umfassen diese Packtulpen nicht nur den bereits bekannten Luftanschluss 13, sondern zusätzlich ebenfalls einen Flüssigkeitsanschluss 14 für die Zufuhr von Flüssigkeit.

Um die Taktzeiten beim Auspacken der Flaschen aus den Getränkekisten nicht zu verlängern, ist es besonders vorteilhaft, das Anfüllen während der ohnehin anfallenden Zeitabschnitte eines Arbeitstaktes durchzuführen. Dazu bietet es sich z.B. an, mit den Anfüllen nach der Arretierung der Flaschen zu beginnen, und die Füllgeschwindigkeit derart zu bemessen, dass das gewünschte Flüssigkeitsvolumen bereits vor dem ursprünglichen Zeitpunkt des Lösens der Arretierung abgefüllt ist.

Grundsätzlich sind aber auch andere Arbeitsabläufe, z.B. mit veränderten Start-und/oder Endpunkten oder einem separatem Arbeitsschritt für das Anfüllen usw. denkbar.

Nachdem das gewünschte Flüssigkeitsvolumen abgefüllt ist, und die Flaschen ihre Abgabeposition erreicht haben, wird die Arretierung gelöst, die Flaschen werden durch Behältertransportanlagen ihrer nächsten Behandlungsstation zugeführt.

Dabei sorgt die durch das Anfüllen erhöhte Kippstabilität der Flaschen für einen im Wesentlichen störungsfreien Transport selbiger.

Dadurch, dass die Packtulpen 15 bei einer erfindungsgemäßen Vorrichtung zumindest zeitweise von Flüssigkeit durchströmt werden, ergibt sich ein weiterer Vorteil dadurch, dass aufgrund dieser Vorgehensweise der sich bei bekannten Packmaschinen 16 in den Packtulpen 15 ansammelnde Schmutz kontinuierlich ausgespült wird, so dass von einer Selbstreinigung der Packtulpen gesprochen werden kann.

Für eine weitere Ausgestaltung der vorliegenden Erfindung ist vorgesehen, dass die Anfüllflüssigkeit durch geeignete Lenk- oder Leitmittel (nicht dargestellt) zumindest teil- und/oder zeitweise auch an die Außenflächen der Flasche geleitet wird, so an dieser anhaftende Schmutzpartikel entweder sofort abgespült oder aber bis zum Erreichen der Reinigungsmaschine zu einem gewissen Grade angeweicht werden.

In diesem Zusammenhang sei darauf hingewiesen, dass auch der durch das Anfüllen hervorgerufene Vorweicheffekt überaus erwünscht ist.

Für den Betrieb einer erfindungsgemäßen Packmaschine 16 ist vorgesehen, dass immer alle Flaschen aus den Getränkekisten ausgepackt werden, unabhängig davon, ob Anfüllflüssigkeit in die Flaschen eingebracht werden kann oder nicht.

Das Anfüllen kann z.B. dadurch unmöglich werden, dass einzelne Flaschen mit verschlossener Flaschenmündung angeliefert wurden. Für derartige Fälle, aber auch für den Fall, dass eine Getränkekiste nicht vollständig gefüllt sein sollte, ist in einer Weiterbildung der Erfindung vorgesehen, die Abgabe von Anfüllflüssigkeit an den relevanten Packtulpenpositionen zu unterbinden, um unnötigen Verbrauch von Anfüllflüssigkeit zu vermeiden.

Zur Realisierung dieser Funktion können z.B. optische oder mechanische Sensoren, mechanische Tast- oder Schaltelemente oder aber auch Systeme zur elektronischen Bildverarbeitung bestehend aus mindestens einer Kamera und mindestens einem Rechner zur Bildauswertung vorgesehen sein, wobei diese Aufzählung lediglich beispielhaften, nicht aber den Umfang der vorliegenden Erfindung beschränkenden Charakter hat.

Für die weitere Gestaltung der Packmaschine 16 ist vorgesehen, diesen mit den entsprechenden Zuleitungen für die Anfüllflüssigkeit auszustatten.

In einer weiteren, überaus vorteilhaften Ausgestaltung der vorliegenden Erfindung ist vorgesehen, auch eine Packmaschine 16 mit allen zur Flüssigkeitsabgabe erforderlichen Mitteln auszustatten, so dass aufgrund der nun innerhalb des Einpackers erfolgenden Füllung der Behälter mit dem Füllgut eine separate Füllmaschine entfallen kann.

Anwendungsgebiet einer solchen Maschine wäre natürlich nur das Abfüllen von Füllgütern nachrangiger Bedeutung, welche darüber hinaus selbstverständlich nicht für den menschlichen Verzehr vorgesehen sein dürfen, was bedeutet, dass während des Füllprozesses nur geringe hygienische Anforderungen zu erfüllen sind. Geeignete Produkte wären z.B. Reinigungsmittel oder Schmiermittel.

## Patentansprüche

1. Packmaschine (16) zum Ein- und/oder Auspacken von Flaschen, Dosen oder dergleichen Behälter in oder aus Getränkekisten oder dergleichen Behältnissen, mit mindestens einer Packtulpe (15) zur Aufnahme der Behälter an ihren Mündungsbereichen, **dadurch gekennzeichnet, dass** die Packmaschine (16) Mittel zur Abgabe von Flüssigkeit in die aus- oder einzupackenden Behälter, während des Aus- oder Einpackens der Behälter aus oder in Getränkekisten, beinhaltet.

2. Packmaschine (16) nach Anspruch 1, **dadurch gekennzeichnet, dass** eine als Auspacker verwendete Packmaschine (16) eine Anfüllflüssigkeit in die Behälter füllt.

3. Packmaschine (16) nach Anspruch 1, **dadurch gekennzeichnet, dass** eine als Einpacker verwendete Packmaschine (16) ein Füllgut in die Behälter füllt.

4. Packmaschine (16) nach einem der vorhergehenden Ansprüche, **dadurch gekennzeichnet, dass** es sich bei den Mitteln zur Abgabe von Flüssigkeit mindestens um mindestens eine Packtulpe (15) handelt.

5. Packmaschine (16) nach einem der vorhergehenden Ansprüche, **dadurch gekennzeichnet, dass** die mindestens eine Packtulpe (15) derart ausgebildet ist, dass sie Flüssigkeit in das Innere des ihr zugeordneten Behälters füllt.

6. Packmaschine (16) nach einem der vorhergehenden Ansprüche, **dadurch gekennzeichnet, dass** Mittel vorgesehen sind, welche die Flüssigkeitsabgabe durch eine Packtulpe (15) dann verhindern, wenn der zugeordnete Behälter verschlossen oder nicht vorhanden ist.

7. Packmaschine (16) nach Anspruch 6, **dadurch gekennzeichnet, dass** es sich bei diesen Mitteln um mechanische oder optische Sensoren handelt.

8. Packmaschine (16) nach Anspruch 6, **dadurch gekennzeichnet, dass** es sich bei diesen Mitteln um mechanische Taster oder Schalter handelt.

9. Packmaschine (16) nach Anspruch 6, **dadurch gekennzeichnet, dass** es sich bei diesen Mitteln um mindestens eine Kamera und um mindestens einen Rechner zur elektronischen Bildauswertung handelt.

10. Packmaschine (16) nach einem der vorhergehenden Ansprüche, **dadurch gekennzeichnet, dass** die mindestens eine Packtulpe (15) derart ausgestaltet ist, dass diese Flüssigkeit auch auf die äußere Behälterwandung leitet.

11. Verfahren zum Betrieb einer Packmaschine (16) nach den vorhergehenden Ansprüchen, **dadurch gekennzeichnet, dass** das Füllen der Behälter mit Flüssigkeit während des Aus- oder Einpackens der Behälter aus oder in Getränkekisten durchgeführt wird und frühestens mit der Positionierung der Packtulpen (15) über den zugeordneten Behältern beginnt und spätestens unmittelbar vor dem Verlassen dieser Position durch die Packtulpen (15) endet.

12. Verfahren zum Betrieb einer Packmaschine (16) nach den vorhergehenden Ansprüchen, **dadurch gekennzeichnet,** die zum Anfüllen verwendete Flüssigkeit ein Reinigungs- und/oder Desinfektionsmittel enthält.

## Claims

1. Packing machine (16) for packing bottles, cans or similar containers into beverage crates or similar receptacles and/or for unpacking bottles, cans or similar containers from beverage crates or similar receptacles, the said packing machine including at least one packing tulip (15) for the receiving of the containers at their mouth region, **characterised in that** the packing machine (16) includes means for discharging liquid when the containers are being packed into the beverage crates or are being unpacked from the beverage crates.

2. Packing machine (16) according to claim 1, **characterised in that** a packing machine (16) used as an unpacker fills a filler liquid into the containers.

3. Packing machine (16) according to claim 1, **characterised in that** a packing machine (16) used as a packer fills a product into the containers.

4. Packing machine (16) according to one of the preceding claims, **characterised in that** the means for discharging liquid is at least one packing tulip (15).

5. Packing machine (16) according to one of the preceding claims, **characterised in that** the at least one packing tulip (15) is designed in such a manner that it fills liquid into the interior of the container associated with it.

6. Packing machine (16) according to one of the preceding claims, **characterised in that** there are provided means, which prevent liquid being discharged by a packing tulip (15) if the associated container is closed or is not present.

7. Packing machine (16) according to claim 6, **characterised in that** the said means are mechanical or optical sensors.

8. Packing machine (16) according to claim 6, **characterised in that** the said means are mechanical probes or switches.

9. Packing machine (16) according to claim 6, **characterised in that** the said means are at least one camera and at least one computer for electronic image evaluation.

10. Packing machine (16) according to one of the preceding claims, **characterised in that** the at least one packing tulip (15) is designed in such a manner that it conducts liquid also onto the outside walls of the container.

11. Method for operating a packing machine (16) in accordance with the preceding claims, **characterised in that** the filling of the containers with liquid is carried out whilst the containers are being packed into beverage crates or are being unpacked from beverage crates and begins at the earliest when the packing tulips (15) are positioned above the associated containers and is ended by the packing tulips (15) at the latest directly before the associated containers leave the said position.

12. Method for operating a packing machine (16) in accordance with the preceding claims, **characterised in that** the liquid used for the filling process is a cleaning and/or disinfecting medium.

## Revendications

1. Machine d'emballage (16) pour empaqueter et/ou dépaqueter des bouteilles, des canettes ou des récipients similaires dans ou hors de caisses de boissons ou de conteneurs similaires, avec au moins une tulipe d'emballage (15) pour la saisie des récipients par leurs zones d'ouverture, **caractérisée en ce que** la machine d'emballage (16) comprend des moyens pour la distribution de liquide dans les récipients à empaqueter ou dépaqueter pendant le dépaquetage ou l'empaquetage des récipients hors ou dans des caisses de boissons.

2. Machine d'emballage (16) selon la revendication 1, **caractérisée en ce qu'**une machine d'emballage (16) utilisée comme machine de dépaquetage verse un liquide de remplissage dans les récipients.

3. Machine d'emballage (16) selon la revendication 1, **caractérisée en ce qu'**une machine d'emballage (16) utilisée comme machine d'empaquetage verse un produit de remplissage dans les récipients.

4. Machine d'emballage (16) selon l'une quelconque des revendications précédentes, **caractérisée en ce que** les moyens pour la distribution de liquide sont au moins une tulipe d'emballage (15).

5. Machine d'emballage (16) selon l'une quelconque des revendications précédentes, **caractérisée en ce que** la au moins une tulipe d'emballage (15) est conçue de telle manière qu'elle verse le liquide à l'intérieur du récipient qui lui est associé.

6. Machine d'emballage (16) selon l'une quelconque des revendications précédentes, **caractérisée en ce qu'**il est prévu des moyens qui empêchent la distribution de liquide par une tulipe d'emballage (15) lorsque le récipient associé est obturé ou n'est pas présent.

7. Machine d'emballage (16) selon la revendication 6, **caractérisée en ce que** ces moyens sont des capteurs mécaniques ou optiques.

8. Machine d'emballage (16) selon la revendication 6, **caractérisée en ce que** ces moyens sont des boutons poussoirs ou des interrupteurs mécaniques.

9. Machine d'emballage (16) selon la revendication 6, **caractérisée en ce que** ces moyens sont au moins une caméra et au moins un ordinateur pour l'exploitation électronique d'images.

10. Machine d'emballage (16) selon l'une quelconque des revendications précédentes, **caractérisée en ce que** la au moins une tulipe d'emballage (15) est conçue de telle manière qu'elle dirige le liquide également sur la paroi extérieure du récipient.

11. Procédé pour le fonctionnement d'une machine d'emballage (16) selon l'une quelconque des revendications précédentes, **caractérisé en ce que** le remplissage des récipients avec le liquide est réalisé pendant le dépaquetage ou l'empaquetage des récipients hors ou dans des caisses de boissons et qu'il commence au plus tôt par le positionnement des tulipes d'emballage (15) au-dessus des récipients associés et qu'il se termine au plus tard juste avant que les tulipes d'emballage (15) quittent cette position.

12. Procédé pour le fonctionnement d'une machine d'emballage (16) selon l'une quelconque des revendications précédentes, **caractérisé en ce que** le liquide utilisé pour le remplissage contient un produit nettoyant et/ou un produit désinfectant.
